# EUROPÄISCHE PATENTSCHRIFT

(11) **EP 4 460 448 B1**
(45) Veröffentlichungstag und Bekanntmachung des Hinweises auf die Patenterteilung: **07.05.2025**
(21) Anmeldenummer: 23709326.5
(22) Anmeldetag: 27.02.2023
(51) Int. Cl.: B60W 30/06, B62D 15/02, B60W 30/18, B60W 30/182

(54) **VERFAHREN ZU EINER RESTWEGREGELUNG FÜR EIN FAHRZEUG**
METHOD FOR CONTROLLING A REMAINING DISTANCE FOR A VEHICLE
PROCÉDÉ DE COMMANDE D'UNE DISTANCE RESTANTE POUR UN VÉHICULE

(30) Priorität: 31.03.2022 DE 102022001119
(43) Veröffentlichungstag der Anmeldung: 13.11.2024
(73) Patentinhaber: Mercedes-Benz Group AG, 70372 Stuttgart (DE)
(72) Erfinder: GEMEINHARDT, Marius, 72108 Ergenzingen (DE)
(74) Vertreter: Novagraaf Group
(86) Internationale Anmeldenummer: PCT/EP2023/054838
(87) Internationale Veröffentlichungsnummer: WO 2023/186429

(56) Entgegenhaltungen:
- EP-A1- 3 613 647
- DE-A1- 102016 006 213
- DE-T5- 112019 005 023

## Beschreibung

Die Erfindung betrifft ein Verfahren zu einer Restwegregelung für ein Fahrzeug zum Anhalten des Fahrzeugs an einer vorgegebenen Halteposition.

Aus der DE 10 2021 005 088 A1 ist ein Verfahren zur Regelung oder Steuerung einer Längsbewegung eines Fahrzeugs nach Maßgabe einer in Abhängigkeit einer erfassten Umgebungssituation geplanten Soll-Trajektorie bekannt. Zum zielgenauen Anhalten des Fahrzeugs an einer durch die Soll-Trajektorie vorgegebenen Halteposition wird vor einem eingeleiteten Fahrzeugstillstand von einer Beschleunigungsregelung auf eine Wegeregelung oder Wegesteuerung umgeschaltet. Zum zielgenauen Anhalten des Fahrzeugs an der durch die Soll-Trajektorie vorgegebenen Halteposition wird vor dem eingeleiteten Fahrzeugstillstand bei Unterschreiten eines vorgegebenen Geschwindigkeitsschwellwerts von der Beschleunigungsregelung auf die Wegeregelung oder Wegesteuerung umgeschaltet.

Aus der DE 10 2014 215 259 A1 ist Verfahren und eine Vorrichtung zum automatischen Auswählen eines Fahrmodus an einem Fahrzeug während einer Fahrt entlang eines Fahrwegs bekannt, wobei vorausschauend Informationen erfasst werden, die den vor dem Fahrzeug liegenden Fahrweg betreffen und wobei der Fahrmodus basierend auf den vorausschauend erfassten Informationen ausgewählt wird.

Aus der DE 10 2018 207 964 A1 ist ein Verfahren und eine Vorrichtung zum Steuern eines Fahrzeugs zu einer Zielposition bekannt, wobei eine Orientierung des Fahrzeugs an der Zielposition festgelegt wird und wobei eine zur Zielposition führende Trajektorie unter Berücksichtigung der Orientierung des Fahrzeugs an der Zielposition und einer Richtung von einer Istposition zur Zielposition festgelegt wird.

Aus der DE 10 2020 201 921 A1 ist ein Verfahren und eine Vorrichtung zum Regeln einer Längsgeschwindigkeit eines Fahrzeugs bei einem automatisch ausgeführten Fahrmanöver bekannt, wobei ein Zielpunkt vorgegeben wird und eine Sollgeschwindigkeit des Fahrzeugs basierend auf einem verbleibenden Restweg von einer aktuellen Fahrzeugposition zu dem Zielpunkt bestimmt wird.

Aus der EP 3 613 647 A1 ist zur Bewältigung komplexerer Fahrsituationen bekannt, eine Trajektorie zum Anhalten des Fahrzeugs an einer vorgegebenen Halteposition, beispielsweise zum Parken des Fahrzeugs, durch mehrere Manöver zu gestalten.

Die DE 11 2019 005023 T5 offenbart ein Verfahren betreffend eine Restwegregelung zum Anhalten eines Fahrzeugs an einer vorgegebenen Soll-Stoppposition, bei dem eine Bremskraft in Abhängigkeit einer bestimmten Fahrgeschwindigkeit eingestellt wird.

Aus der DE 10 2016 006213 A1 ist ein eine Restwegregelung betreffendes Verfahren zum Anhalten eines Fahrzeugs an einer vorgegebenen Halteposition bekannt, wobei bei einem langen Restweg ein auf Komfort ausgelegter Geschwindigkeitsmodus und kurz vor Erreichen der vorgegebenen Halteposition ein präziserer Beschleunigungsmodus eingestellt wird.

Der Erfindung liegt die Aufgabe zu Grunde, ein neuartiges Verfahren zu einer Restwegregelung für ein Fahrzeug zum Anhalten des Fahrzeugs an einer vorgegebenen Halteposition anzugeben.

Die Aufgabe wird erfindungsgemäß gelöst durch ein Verfahren, welches die im Anspruch 1 angegebenen Merkmale aufweist.

Vorteilhafte Ausgestaltungen der Erfindung sind Gegenstand der Unteransprüche.

In dem Verfahren zu einer Restwegregelung für ein Fahrzeug zum Anhalten des Fahrzeugs an einer vorgegebenen Halteposition wird die Restwegregelung wahlweise in einem von zwei Modi durchgeführt, wobei einer der beiden Modi ein Komfortmodus ist, d. h. ein auf Komfort ausgelegter Modus ist, und der andere Modus ein hochgenauer Modus ist, d. h. ein auf hohe Genauigkeit ausgelegter Modus ist. Das heißt, der Modus, in dem die die Restwegregelung durchgeführt wird, wird wahlweise, also basierend auf einer Auswahl, festgelegt und kann somit wahlweise zwischen dem Komfortmodus und dem hochgenauen Modus umgeschaltet werden. Das Verfahren wird bei einem mehrzügigen Manöver angewendet, bei dem das Fahrzeug in mehreren Manöverzügen zur vorgegebenen Halteposition geführt wird. Die einzelnen Manöverzüge enden dabei jeweils in einer Zielposition, an der das Fahrzeug angehalten werden soll. Eine aktuelle Situation wird unter Berücksichtigung mindestens eines bereits ausgeführten Manöverzugs, insbesondere unter Berücksichtigung einer Manöverausführungsgenauigkeit des mindestens einen bereits ausgeführten Manöverzugs bestimmt. In Abhängigkeit der aktuellen Situation wird ausgewählt, in welchem der beiden Modi die Restwegregelung durchgeführt werden soll, ob also die Restwegregelung im Komfortmodus oder im hochgenauen Modus durchgeführt werden soll. Die Auswahl basiert dabei auf einem Abgleich der aktuellen Situation mit einer Liste mit vorgegebenen Situationen. In der Liste ist dabei für jede der vorgegebenen Situationen vorbestimmt, in welchem Modus die Restwegregelung durchgeführt werden soll. Es ist also vorbestimmt, in welcher der vorgegebenen Situationen die Restwegregelung im Komfortmodus durchgeführt werden soll und in welcher der vorgegebenen Situationen die Restwegregelung im hochgenauen Modus durchgeführt werden soll.

Der Abgleich der aktuellen Situation mit der Liste mit den vorgegebenen Situationen erfolgt vorzugsweise dadurch, dass in Abhängigkeit der aktuellen Situation aus der Liste eine zur aktuellen Situation korrespondierende vorgegebene Situation identifiziert wird und dass der für diese Situation vorbestimmte Modus für die Durchführung der Restwegregelung ausgewählt wird. Es wird insbesondere ermittelt, welche der gelisteten vorgegebenen Situationen am besten zur aktuellen Situation passt und es wird der für diese Situation vorbestimmte Modus als Modus ausgewählt, in dem die Restwegregelung durchgeführt werden soll.

Eine reale Restwegregelung unterliegt prinzipbedingt Streuungen auf einer gesamten Wirkkette, welche für einen Nutzer eines Fahrzeugs in unkomfortablen oder nicht nachvollziehbaren Manövern resultieren können. Insbesondere unterliegen Zielbremsungen einer Standardverteilung. Das vorliegende Verfahren ermöglicht in vorteilhafter Weise durch die Umschaltung zwischen dem Komfortmodus und dem hochgenauen Modus eine situationsangepasste Restwegregelung, welche eine Anzahl von unnötigen harten und unkomfortablen Abbremsungen des Fahrzeugs bei einem mehrzügigen Manöver minimiert. Dabei sind beispielsweise bei einem automatisiert durchgeführten Einparkvorhang eines Fahrzeugs eine Annäherung einer längsgeführten Assistenzfunktion der Restwegregelung an ein menschliches Rangierverhalten und somit eine signifikante Komforterhöhung möglich. Somit wird ein Kundenerlebnis in Bezug auf ein assistiertes Manövrieren des Fahrzeugs signifikant verbessert.

In einer möglichen Ausgestaltung des Verfahrens wird die aktuelle Situation,
insbesondere die Manöverausführungsgenauigkeit, auf deren Basis die aktuelle Situation bestimmt wird, unter Berücksichtigung einer Anhaltegenauigkeit bestimmt, mit der das Fahrzeug in mindestens einem Manöverzug die jeweilige Zielposition erreicht hat.

In einer weiteren möglichen Ausgestaltung des Verfahrens wird die aktuelle Situation, insbesondere die Manöverausführungsgenauigkeit, auf deren Basis die aktuelle Situation bestimmt wird, unter Berücksichtigung von mindestens einem Manöverzug bestimmt, der an einem frühzeitigen Stopppunkt vor Erreichen der jeweiligen Zielposition beendet worden ist.

In einer weiteren möglichen Ausgestaltung des Verfahrens wird die aktuelle Situation, insbesondere die Manöverausführungsgenauigkeit, auf deren Basis die aktuelle Situation bestimmt wird, unter Berücksichtigung von mindestens einem Manöverzug bestimmt, bei oder nach dessen Ausführung ein verbleibender Restweg zur jeweiligen Zielposition einen vorgegebenen Wert unterschreitet.

In einer weiteren möglichen Ausgestaltung des Verfahrens werden Streuungen in den Anhaltegenauigkeiten aller ausgeführten Manöverzüge ermittelt und gespeichert und bei der Bestimmung der aktuellen Situation berücksichtigt. Die Streuungen beeinflussen somit die Auswahl des Modus und werden somit in einer Manöverfortführung eines jeweils folgenden Manöverzugs berücksichtigt. Dies ermöglicht beispielsweise auf einer Schnittstelle zwischen einem Trajektorienregler und einem über- oder unterlagertem Regler, Streuungen in der Restwegregelung in eine Trajektorienregelung bzw. Restwegvorgabe aufzunehmen. Dies ermöglicht eine weitere Verbesserung einer Nachahmung des menschlichen Rangierverhaltens.

In einer weiteren möglichen Ausgestaltung des Verfahrens wird die aktuelle Situation unter Berücksichtigung einer Steigung eines Fahruntergrunds des Fahrzeugs und/oder eines Freiraums zwischen dem Fahrzeug und zumindest einem Hindernis bestimmt. Dies ermöglicht in besonders vorteilhafter Weise eine einfache und zuverlässige Einschätzung und Bestimmung der Situation. Aufgrund der Berücksichtigung des Freiraums bei der Restwegregelung sowie die Umschaltung kann situationsbezogen besonders häufig ein hoher Komfort für den Fahrzeugnutzer erreicht werden. Aufgrund der Berücksichtigung der Steigung des Fahruntergrunds wird ein schnelleres Anfahren des Fahrzeugs in einem Manöver ermöglicht.

In einer weiteren möglichen Ausgestaltung des Verfahrens werden oder wird im Komfortmodus gegenüber dem hochgenauen Modus
- eine größere mögliche Anzahl erlaubter Manöverzüge des Fahrzeugs, bei oder nach deren Ausführung ein verbleibender Restweg einen vorgegebenen Wert unterschreitet, vorgegeben und/oder
- eine größere mögliche Anzahl erlaubter Manöverzüge des Fahrzeugs, welche an einem frühzeitigen Stopppunkt beendet werden, vorgegeben und/oder
- ein früherer möglicher Zeitpunkt für einen Anfahrvorgang in einem Manöverzug zugelassen und/oder
- eine größere Soll-Gleichmäßigkeit eines Bremsvorgangs auf eine Zielposition vorgegeben und/oder
- ein Zurückrollen des Fahrzeugs bei einem Anfahrvorgang an einer Steigung und/oder einer Überfahrung eines Bordsteins zugelassen und/oder
- eine größere Toleranz gegenüber einer Überschreitung einer maximalen Geschwindigkeit des Fahrzeugs zugelassen und/oder
- eine verringerte Reproduzierbarkeit eines Manöverzugs zugelassen und/oder
- unter Einhaltung einer Gesamtdauer eines Manöverzugs eine Beschleunigung des Anfahrvorgangs zugelassen, eine Beschleunigung eines Erreichens der Höchstgeschwindigkeit zugelassen und eine größere Gleichmäßigkeit eines Bremsvorgangs an einer Zielposition vorgegeben.

Mittels eines derart ausgebildeten und ausgeführten Komfortmodus kann der Komfort des Fahrzeugnutzers optimiert werden.

In einer weiteren möglichen Ausgestaltung des Verfahrens werden oder wird im hochgenauen Modus gegenüber dem Komfortmodus
- eine geringere mögliche Anzahl erlaubter Manöverzüge des Fahrzeugs, bei oder nach deren Ausführung ein verbleibender Restweg einen vorgegebenen Wert unterschreitet, vorgegeben und/oder
- eine Weiterführung von Manöverzügen des Fahrzeugs, welche an einem frühzeitigen Stopppunkt beendet werden, zugelassen und/oder
- spätere Zeitpunkte für Anfahrvorgänge in Manöverzügen zugelassen und/oder
- eine geringere Soll-Gleichmäßigkeit eines Bremsvorgangs auf eine Zielposition zugelassen und/oder
- ein Zurückrollen des Fahrzeugs bei einem Anfahrvorgang an einer Steigung und/oder einer Überfahrung eines Bordsteins nicht zugelassen und/oder
- eine geringere Toleranz gegenüber einer Überschreitung einer maximalen Geschwindigkeit des Fahrzeugs zugelassen und/oder
- eine erhöhte Reproduzierbarkeit eines Manöverzugs vorgegeben und/oder
- eine geringe Priorisierung einer Einhaltung einer Gesamtdauer eines Manöverzugs zugelassen.

Mittels eines derart ausgebildeten hochgenauen Modus können assistierte Manöver besonders exakt und zuverlässig ausgeführt werden.

Ausführungsbeispiele der Erfindung werden im Folgenden anhand von Zeichnungen näher erläutert.

Dabei zeigen:
- Fig. 1: schematisch eine Draufsicht einer Verkehrssituation,
- Fig. 2: schematisch eine Draufsicht einer Verkehrssituation,
- Fig. 3: schematisch eine Wahrscheinlichkeit eines Auftretens von Restwegen nach einer Durchführung einer Zielbremsung eines Fahrzeugs,
- Fig. 4: schematisch ein Abhängigkeits-Diagramm verschiedener Parameter einer Restwegregelung,
- Fig. 5: schematisch das Abhängigkeits-Diagramm gemäß Figur 5 mit einer Gewichtung der Parameter der Restwegregelung,
- Fig. 6: schematisch das Abhängigkeits-Diagramm gemäß Figur 5 mit einer weiteren Gewichtung der Parameter der Restwegregelung,
- Fig. 7: schematisch ein Blockschaltbild eines Systems zu einer Restwegregelung für ein Fahrzeug und
- Fig. 8: schematisch einen zeitlichen Verlauf eines Restwegs und einer Fahrzeuggeschwindigkeit.

Einander entsprechende Teile sind in allen Figuren mit den gleichen Bezugszeichen versehen.

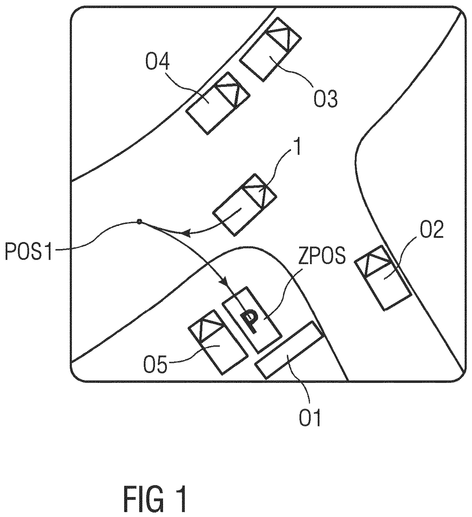

In Figur 1 ist eine Draufsicht einer Verkehrssituation mit einem Fahrzeug 1 und mehreren Objekten O1 bis O5 dargestellt. Dabei ist das Objekt O1 eine Wand und die Objekte O2 bis O5 sind Fahrzeuge.

Bei der dargestellten Verkehrssituation ist ein Freiraum R zwischen dem Fahrzeug 1 und den Objekten O1 bis O5, welche während eines Einparkmanövers des Fahrzeugs 1 Hindernisse für das Fahrzeug 1 bilden, relativ groß.

Das Fahrzeug 1 führt ein automatisiertes Einparkmanöver in zwei Manöverzügen aus. Eine Zielposition POS1 eines ersten Manöverzuges befindet sich dabei auf einer Fahrbahn, wobei das Fahrzeug 1 zum Erreichen dieser Zielposition POS1 ausgehend von seiner dargestellten Ausgangsposition rückwärts fährt und eine Lenkung nach links einschlägt. Eine Zielposition ZPOS des gesamten Einparkmanövers, das heißt nach Beendigung eines zweiten Manöverzuges, befindet sich auf einer Parkfläche neben dem Objekt O5 und vor dem als Wand ausgebildeten Objekt O1. Diese Zielposition ZPOS erreicht das Fahrzeug 1 ausgehend von der Zielposition POS1 des ersten Manöverzuges durch eine Vorwärtsfahrt und Einschlagen der Lenkung nach rechts.

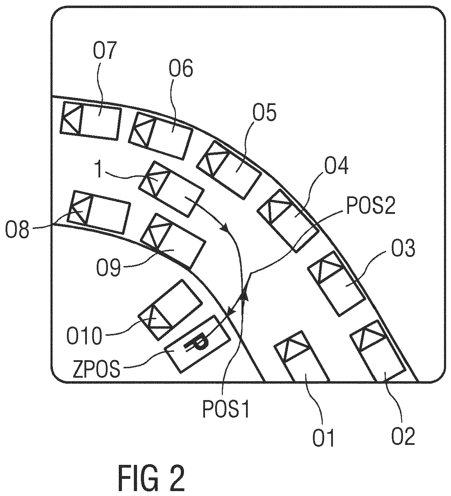

Figur 2 zeigt eine Draufsicht einer Verkehrssituation mit einem Fahrzeug 1 und mehreren Objekten O1 bis O10 dargestellt. Dabei sind die Objekte O1 bis O10 Fahrzeuge.

Bei der dargestellten Verkehrssituation ist ein Freiraum R zwischen dem Fahrzeug 1 und den Objekten O1 bis O10, welche während des Einparkmanövers Hindernisse für das Fahrzeug 1 bilden, relativ klein.

Aufgrund dieses relativ kleinen Freiraums R führt das Fahrzeug 1 ein automatisiertes Einparkmanöver in drei Manöverzügen aus. Eine Zielposition POS1 eines ersten Manöverzuges befindet sich dabei auf einer Fahrbahn, wobei das Fahrzeug 1 zum Erreichen dieser Zielposition POS1 ausgehend von seiner dargestellten Ausgangsposition rückwärts fährt und eine Lenkung nach links einschlägt. Eine Zielposition POS2 eines zweiten Manöverzuges befindet sich ebenfalls auf der Fahrbahn, wobei das Fahrzeug 1 zum Erreichen dieser Zielposition POS2 ausgehend von der Zielposition POS1 des ersten Manöverzuges Ausgangsposition vorwärts fährt und die Lenkung nach rechts einschlägt. Eine Zielposition ZPOS des gesamten Einparkmanövers, das heißt nach Beendigung eines dritten Manöverzuges, befindet sich auf einer Parkfläche neben dem Objekt O10. Diese Zielposition ZPOS erreicht das Fahrzeug 1 ausgehend von der Zielposition POS2 des zweiten Manöverzuges durch eine Rückwärtsfahrt und Einschlagen der Lenkung nach links.

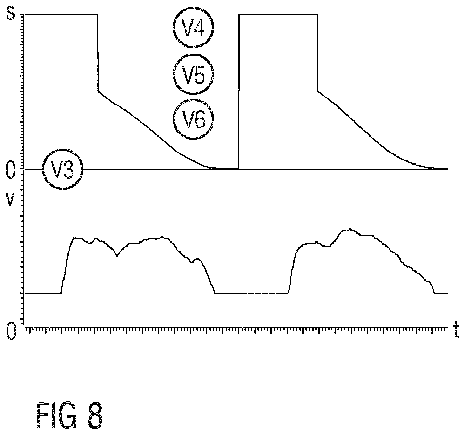

Für Nahfeldassistenzsysteme, wie beispielsweise ein solcher Einparkassistent, unterliegen Zielbremsungen und eine Geschwindigkeitsregelung bei einem längsgeführten Manövrieren Abweichungen. Diese physikalisch unvermeidbaren und von einer aktuellen Situation, in welcher das Fahrzeug 1 betrieben wird, abhängigen Abweichungen werden vorliegend dadurch bei einer Restwegregelung berücksichtigt, dass die Restwegregelung situationsabhängig in einem Komfortmodus oder einem hochgenauen Modus ausgeführt wird. Kernmerkmale für ein dabei ausgeführtes Trajektorienmanagement sind dabei
- unterschiedliche Steuerungsleistungen, welche eine hochgenaue oder komfortable Längssteuerung auführen,
- eine Berücksichtigung des Freiraums R zwischen dem Fahrzeug 1 und in dessen Umgebung befindlicher Hindernisse, beispielsweise der Objekte O1 bis O10,
- eine Berücksichtigung einer Steigung eines Fahruntergrunds des Fahrzeugs 1,
- eine Berücksichtigung von Manöverzügen des Fahrzeugs 1, welche an einem frühzeitigen Stopppunkt beendet werden, und/oder
- eine Berücksichtigung von Manöverzügen des Fahrzeugs 1, bei oder nach deren Ausführung ein verbleibender Restweg s (dargestellt in Figur 8) einen vorgegebenen Wert unterschreitet, das heißt, welche bei einer Überschreitung einer Reststrecke enden.

Im Allgemeinen, wenn der Restwegregelung nur Informationen über eine (geschätzte) Eigenbewegung und keine weitere Rückkopplung aus der Fahrzeugumgebung zur Verfügung steht, müssen der Restwegregelung Informationen über eine erforderliche Führung des Fahrzeugs 1 zugeführt werden, welche die Restwegregelung für einen aktuellen Manöverzug erfüllen muss.

Es existiert eine Vielzahl möglicher Manövrierszenarien, wobei die Figuren 1 und 2 nur zwei mögliche Beispiele solcher Manövrierszenarien zum Einparken des Fahrzeugs 1 in eine Parklücke zeigen. Es existieren einige weitere Kundenfunktionen sowie spezielle Funktionen, wie beispielsweise eine ferngesteuerte Parkfunktion (Remote Parking), ein so genanntes Memory Parking, ein so genanntes automatisiertes Valet Parking, ein so genanntes Piloted Parking, usw., in welchen ebenfalls solche Manövrierszenarien im Rahmen eines automatisierten Betriebs des Fahrzeugs 1 ausgeführt werden. Selbst wenn für ein einzelnes Manovrierszenario ein ziemlich ähnliches Setup vorhanden ist, muss der Ablauf der jeweiligen Assistenzfunktion bei jeder Ausführung neu abgeleitet werden, da viele unterschiedliche Einflussfaktoren, wie beispielsweise Wahrnehmungsabweichungen, dynamische Objekte O1 bis O10, unterschiedliche Straßenoberflächenbedingungen, das Vorhandensein von Bordsteinen und Stoppern, Benutzerinteraktion usw. auftreten können.

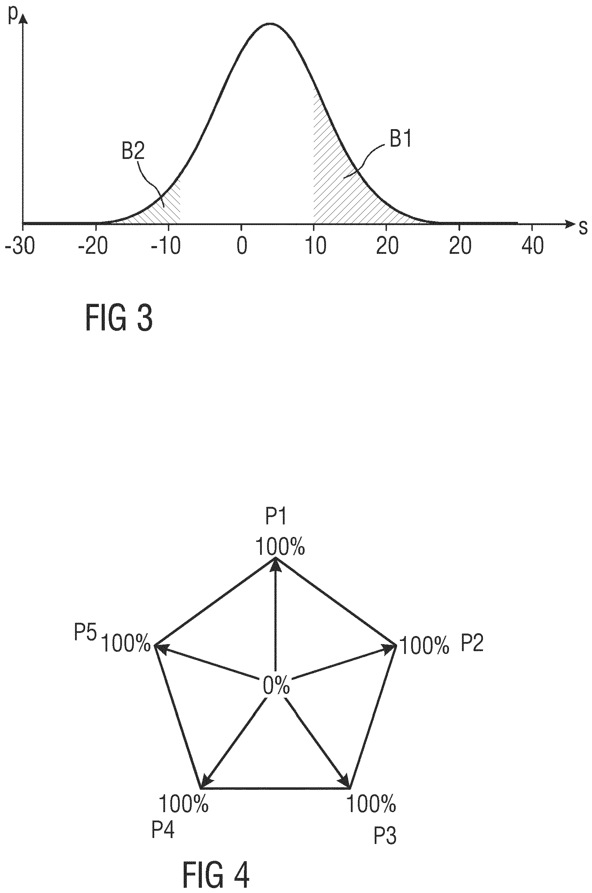

Figur 3 zeigt eine Wahrscheinlichkeit p eines Auftretens von Restwegen s nach einer Durchführung einer Zielbremsung eines Fahrzeugs 1.

In den meisten Fällen, in welchen die Restwegregelung das Fahrzeug 1 zu früh stoppt, das heißt in Fällen, in welchen der Restweg s einen positiven Wert aufweist und einen vorgegebenen Wert überschreitet und somit ein vorzeitiger Stillstand des Fahrzeugs 1 auftritt (dargestellt durch einen Bereich B1), sind akzeptabel, wenn nur ein geringer Restweg s verbleibt und ein Ziel und eine Dauer des gesamten Manövers nicht beeinträchtigt werden. In engen Szenen mit geringem Freiraum R zwischen dem Fahrzeug 1 und Hindernissen, ist es dagegen meist zwingend erforderlich, bei der Ausführung den jeweiligen Manöverzugs den zur Verfügung stehenden Freiraum R möglichst maximal auszunutzen, um eine geplante Anzahl an Manöverzügen erreichen zu können.

Jedoch muss gleichzeitig auch das Auftreten von harten Bremsungen und eines Überschreitens des vorgegebenen Werts des Restwegs s (dargestellt durch einen Bereich B2) minimiert werden. Dies kann entweder durch Einstellen der Restwegregelung in Bezug auf deren Genauigkeit erfolgen oder durch Anzeigen, dass kein Erfordernis einer Eskalation/Übertreibung/Erhöhung einer Zielbremsung vorliegt, wenn der Restweg s überschritten wird. Diese unterschiedlichen Vorgehensweisen bzw. Leistungsfähigkeiten werden der Restwegregelung gemeldet. Prinzipbedingt sollte ein Restwegregler, der aus einem noch abzufahrenden Restweg eine Sollbeschleunigung oder in einem Reglerkreis ein Sollmoment, beispielsweise Sollbremsmoment, errechnet, bei negativer Restwegvorgabe die Bremsmomentanforderung erhöhen, da wahrscheinlich eines der folgenden Ereignisse in der Regelung, das heißt mit ein oder mehreren Rückführgrößen, eingetreten ist:
- Fehler in der Störgrößenbeobachtung (falls vorhanden), wie Steigung, Reibwert, Beladung, usw.,
- Fehler/Streuung der Istbeschleunigung,
- Fehler in der Hydraulik /Mechanik,
- Regler-Applikation.

Es kann vorgesehen sein, dass im Komfortmodus keine solche Eskalation erfolgen sollte, da hier die Regler-Applikation toleranter ausgelegt sein sollte.

In Figur 4 ist ein Abhängigkeits-Diagramm verschiedener Parameter P1 bis P5 einer Restwegregelung dargestellt.

Dabei betrifft ein erster Parameter P1 beispielsweise einen Anfahr- und Anhaltkomfort, ein zweiter Paramater P2 beispielsweise eine Robustheit gegenüber Störungen, ein dritter Parameter eine Stabilität und Reproduzierbarkeit, ein vierter Parameter P4 eine Gesamtdauer eines Manöverzuges und ein fünfter Parameter P5 eine Anhaltegenauigkeit.

Da diese Parameter P1 bis P5 zumindest teilweise konkurrierend ausgebildet sind, muss während der Durchführung eines Manövers durch die Restwegregelung ein Kompromiss zwischen den Parametern P1 bis P5 gewählt werden. Entsprechende Vorschriften zur Einstellung solcher Kompromisse werden bereits bei einem Entwurf der Restwegregelung hinterlegt.

Zur Ausführung der Restwegregelung ist ein Restwegvorgabe-Trajektorienplaner dazu ausgebildet, unterschiedliche Leistungsmerkmale von einer über- und/oder untergeordneten Steuerung anzufordern. Dies bewirkt eine Verschiebung in den Kompromissen.

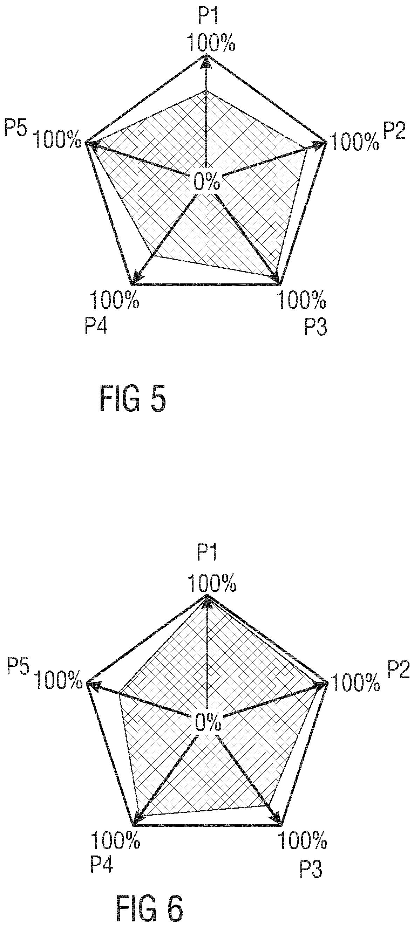

Die Figuren 5 und 6 zeigen Abhängigkeitsdiagramme mit unterschiedlichen Gewichtungen der Parameter P1 bis P5 für den hochgenauen Modus (Figur 5) und den Komfortmodus (Figur 6) und somit Beispiele, wie ein Kompromiss zwischen den Parametern P1 bis P5 für zwei unterschiedliche Leistungsmerkmale gelöst werden kann. Wie die Gewichtung der Parameter P1 bis P5 hängt davon ab, was von einem Fahrzeugnutzer als angenehm empfunden wird und unterliegt somit zumindest teilweise einer subjektiven Bewertung. Auch besteht die Möglichkeit, mehr als die zwei dargestellten Leistungsmerkmale (hochgenauer Modus und Komfortmodus) zu konfigurieren, wie beispielsweise ein Exploit-Stroke (maximale Ausnutzung der Restwegvorgabe). Dieser Parameter könnte zwar auch der Anhaltegenauigkeit zugeordnet werden, doch hier die Vermeidung von aus Kundensicht sehr unschönem Nachsetzen (nochmaliges Anfahren in dieselbe Richtung nach zu früher Zielbremsung) gemeint. Ein Restwegregler könnte auch darauf abgestimmt werden, dies möglichst häufig zu vermeiden, was de facto in einer Verschiebung und/oder Stauchung der Standardverteilung der Zielbremsung nach links resultiert. Es kann vorgesehen sein, dass der Erfüllungsgrad dieses Parameters für den Komfortmodus maximal ist bzw. dass der Trajektorienregler das verfrühte Anhalten akzeptiert. Im hochgenauen Modus kann davon ausgegangen werden, dass der Parameter ohnehin erfüllt wird, doch ein schärferer Regler wird das Fahrzeug häufiger zu früh zum Stehen bringen.

In dem hochgenauen Modus sind beispielsweise der die Stabilität und Reproduzierbarkeit des Manövers betreffende Parameter P3 und der die Anhaltegenauigkeit betreffende Parameter P5 gegenüber den anderen Parametern P1, P2, P4 höher gewichtet.

In dem Komfortmodus sind beispielsweise der den Anfahr- und Anhaltkomfort betreffende Parameter P1, der die Robustheit gegenüber Störungen betreffende Parameter P2 und der die Einhaltung der Gesamtdauer eines Manöverzuges betreffende Parameter P4 gegenüber den anderen Parametern P3 und P5 höher gewichtet.

Insbesondere werden im hochgenauen Modus gegenüber dem Komfortmodus im Rahmen der Einstellung des Parameters P1, welcher den Anfahr- und Anhaltkomfort betrifft, spätere Zeitpunkte für Anfahrvorgänge in Manöverzügen und eine geringere Soll-Gleichmäßigkeit eines Bremsvorgangs auf eine Zielposition POS1, POS2, ZPOS zugelassen.

Insbesondere wird der hochgenaue Modus weiterhin gegenüber dem Komfortmodus im Rahmen der Einstellung des Parameters P2, welcher die Robustheit gegenüber Störungen betrifft, derart ausgeführt, dass Oberflächeneigenschaften eines Fahruntergrunds des Fahrzeugs 1 minimalen Einfluss auf die Genauigkeit haben, und ein Zurückrollen des Fahrzeugs 1 bei einem Anfahrvorgang an einer Steigung und/oder einer Überfahrung eines Bordsteins wird nicht zugelassen. Insbesondere wird eine Freigabe für ein Rollen des Fahrzeugs 1 gegen die eingelegte Fahrposition abhängig vom Freiraum R und einem Überschreiten des Restwegs s im letzten Manöverzug, beispielsweise bei einer harten Bremsung, gewählt.

Insbesondere wird im hochgenauen Modus weiterhin gegenüber dem Komfortmodus im Rahmen der Einstellung des Parameters P3, welcher die Stabilität und Reproduzierbarkeit des Manövers betrifft, angenommen, dass die Stabilität und Reproduzierbarkeit zwingende Voraussetzung einer hohen Genauigkeit sind und eine zulässige Toleranz gegenüber einer Überschreitung einer maximalen Geschwindigkeit des Fahrzeugs 1 ist minimal.

Insbesondere wird der hochgenaue Modus weiterhin gegenüber dem Komfortmodus im Rahmen der Einstellung des Parameters P4, welcher die Gesamtdauer eines Manöverzuges betrifft, derart ausgeführt, dass die Einhaltung einer Gesamtdauer eines Manöverzugs geringer priorisiert wird.

Insbesondere werden im hochgenauen Modus weiterhin gegenüber dem Komfortmodus im Rahmen der Einstellung des Parameters P5, welcher die Anhaltegenauigkeit betrifft, eine geringere mögliche Anzahl erlaubter Manöverzüge des Fahrzeugs zugelassen, bei oder nach deren Ausführung ein verbleibender Restweg s einen vorgegebenen Wert unterschreitet, eine geringere Standardabweichung zugelassen und Manöverzüge des Fahrzeugs 1, welche an einem frühzeitigen Stopppunkt beendet werden, vermieden und ggf. fortgeführt.

Der hochgenaue Modus wird beispielsweise bei geringem Freiraum R in Fahrtrichtung zur jeweiligen Zielposition POS1, POS2, ZPOS aktiviert. Auch kann eine Anzahl der Manöverzüge minimiert werden, indem ein Nichtausnutzen eines vorgegebenen Restwegs s vermieden wird und somit zusätzliche Manöverzüge vermieden werden. Auch ist eine Weiterführung eines Manöverzuges nach einem Stillstand des Fahrzeugs 1 zugelassen, wenn ein vorzeitiges Zielbremsen auftritt. Weiterhin wird der hochgenaue Modus insbesondere auch in engen Situationen ausgeführt werden, beispielsweise wenn ein gesamtes Manöver in einer eingeengten Umgebung, wie zum Beispiel in einer Einbahnstraße, erfolgt und alle Manöverzüge mit hoher Genauigkeit ausgeführt werden müssen, obwohl eine aktuelle Zielposition POS1, POS2, ZPOS genügend Freiraum R bietet. Weiterhin wird der hochgenaue Modus insbesondere auch bei nahen Hindernissen ausgeführt, um ein Überfahren einer Zielposition POS1, POS2, ZPOS bei in Richtung eines Hindernisses gerichteter Fahrt zu vermeiden. Weiterhin wird der hochgenaue Modus insbesondere auch bei nahen dynamischen Hindernissen ausgeführt, wobei Kollisionsvermeidungsalgorithmen können eine strikte Begrenzung einer Höchstgeschwindigkeit des Fahrzeugs 1 anfordern können, um eine Kollisionsvermeidung in einer aktuellen Szene sicherzustellen.

Im Komfortmodus werden dagegen gegenüber dem hochgenauen Modus im Rahmen der Einstellung des Parameters P1, welcher den Anfahr- und Anhaltkomfort betrifft, insbesondere frühere Zeitpunkte für Anfahrvorgänge in Manöverzügen und eine höhere Soll-Gleichmäßigkeit eines Bremsvorgangs auf eine Zielposition POS1, POS2, ZPOS zugelassen.

Insbesondere wird der Komfortmodus weiterhin gegenüber dem hochgenauen Modus im Rahmen der Einstellung des Parameters P2, welcher die Robustheit gegenüber Störungen betrifft, derart ausgeführt, dass ein Zurückrollen des Fahrzeugs 1 bei einem Anfahrvorgang an einer Steigung und/oder einer Überfahrung eines Bordsteins zugelassen wird. Insbesondere wird eine Freigabe für ein Rollen des Fahrzeugs 1 gegen die eingelegte Fahrposition abhängig vom Freiraum R und einem Überschreiten des Restwegs s im letzten Manöverzug, beispielsweise bei einer harten Bremsung, gewählt.

Insbesondere wird der Komfortmodus weiterhin gegenüber dem hochgenauen Modus im Rahmen der Einstellung des Parameters P3, welcher die Stabilität und Reproduzierbarkeit des Manövers betrifft, derart ausgeführt, dass eine größere Toleranz gegenüber einer Überschreitung einer maximalen Geschwindigkeit des Fahrzeugs 1 zugelassen wird und/oder eine verringerte Reproduzierbarkeit eines Manöverzugs zugelassen wird.

Insbesondere wird der Komfortmodus weiterhin gegenüber dem hochgenauen Modus im Rahmen der Einstellung des Parameters P4, welcher die Gesamtdauer eines Manöverzuges betrifft, derart ausgeführt, dass unter Einhaltung der Gesamtdauer des Manöverzugs eine Beschleunigung des Anfahrvorgangs zugelassen wird, einer Beschleunigung eines Erreichens einer Höchstgeschwindigkeit des Fahrzeugs 1 zugelassen wird und eine größere Gleichmäßigkeit des Bremsvorgangs an einer Zielposition POS1, POS2, ZPOS vorgegeben wird.

Insbesondere werden im Komfortmodus weiterhin gegenüber dem hochgenauen Modus im Rahmen der Einstellung des Parameters P5, welcher die Anhaltegenauigkeit betrifft, eine größere mögliche Anzahl erlaubter Manöverzüge des Fahrzeugs, bei oder nach deren Ausführung ein verbleibender Restweg einen vorgegebenen Wert unterschreitet, eine größere mögliche Anzahl erlaubter Manöverzüge des Fahrzeugs, welche an einem frühzeitigen Stopppunkt beendet werden, und eine größere Standardabweichung zugelassen. Auch können Manöverzüge abgebrochen und neu geplant werden. Eine Zulassung von Manöverzügen mit frühzeitigem Stopppunkt erfolgt beispielsweise dann, wenn vom hochgenauen Modus auf den Komfortmodus umgeschaltet wird, weil mehr Freiraum R zur Verfügung steht.

Der Komfortmodus wird beispielsweise bei großem Freiraum R in Fahrtrichtung zur jeweiligen Zielposition POS1, POS2, ZPOS aktiviert.

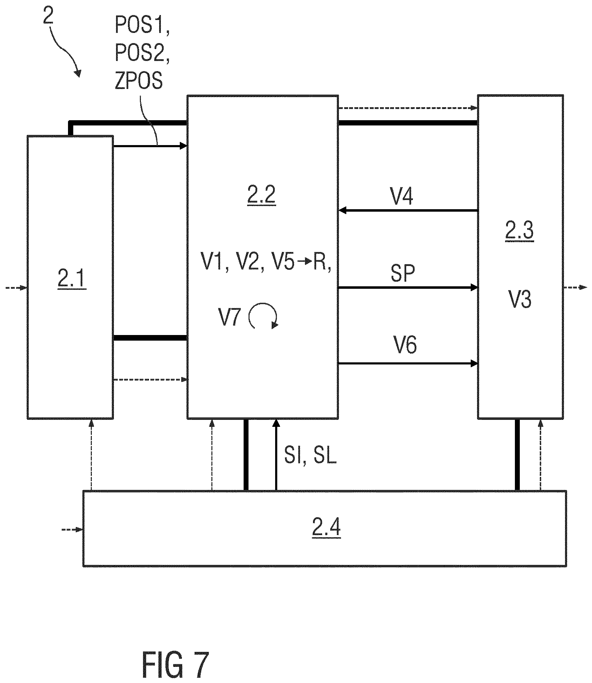

Figur 7 zeigt ein Blockschaltbild eines möglichen Ausführungsbeispiels eines Systems 2 zu einer Restwegregelung für ein Fahrzeug 1.

Das System 2 umfasst ein Modell 2.1 der realen Welt, ein Trajektoriemanagement-Modul 2.2, ein Restwegregelungsmodul 2.3 und ein Eigenbewegungsmodul 2.4.

Das Trajektoriemanagement-Modul 2.2, welches on-board im Fahrzeug 1 oder in einer fahrzeugexternen Infrastruktur ausgebildet ist, erhält von dem Modell 2.1 der realen Welt die jeweilige Zielposition POS1, POS2, ZPOS eines Manöverzugs und von dem Eigenbewegungsmodul 2.4, welches Eigenbewegungsdaten des Fahrzeugs 1 beispielsweise aus einer Inertialmesssensorik, einer radarbasierten Sensorik und/oder einer Näherungsgeschwindigkeitserkennung ermittelt, insbesondere eine Stillstandsinformation SI und eine Information SL über eine Steigung eines Fahruntergrunds des Fahrzeugs 1.

In Abhängigkeit der jeweiligen Zielposition POS1, POS2, ZPOS eines Manöverzuges und weiterer Umgebungs- und Fahrzeugparameter ermittelt das Trajektoriemanagement-Modul 2.2 in einem Verfahrensschritt V2 eine aktuelle Situation und entsprechende Steuerparameter SP, beispielsweise eine verbleibende Distanz des Fahrzeugs 1 zu einem Hindernis und eine maximale Geschwindigkeit des Fahrzeugs 1 in einem Manöverzug, und übermittelt diese an das Restwegregelungsmodul 2.3.

Das Restwegregelungsmodul 2.3 beginnt in einem Verfahrensschritt V3 mit der Restwegregelung inklusive einer Leistungsanfrage für eine aktuelle Situation bzw. Szene und einen jeweiligen Manöverzug. Die Leistungsanfrage umfasst dabei, in welchem Modus, das heißt im Komfortmodus oder hochgenauen Modus, die Restwegregelung ausgeführt werden soll.

Weiterhin ermittelt das Restwegregelungsmodul 2.3, insbesondere kontinuierlich, in einem Verfahrensschritt V4 einen geschätzten Anhalteweg und übermittelt diesen an das Trajektoriemanagement-Modul 2.2.

In Abhängigkeit dieses geschätzten Anhaltwegs ermittelt das Trajektoriemanagement-Modul 2.2 in einem Verfahrensschritt V5 an der jeweiligen Zielposition POS1, POS2, ZPOS eines Manöverzuges einen Freiraum R des Fahrzeugs 1 zu einem Hindernis.

Wenn erforderlich, stellt das Trajektoriemanagement-Modul 2.2 in einem weiteren Verfahrensschritt V6 eine Anfrage zur Änderung der Leistungsanforderung, das heißt zur Änderung vom Komfortmodus in den hochgenauen Modus oder vom hochgenauen Modus in den Komfortmodus.

Nach einer Durchführung einer Zielbremsung erhält das Trajektoriemanagement-Modul 2.2 in einem weiteren Verfahrensschritt V7 ein Resultat der Zielbremsung und entscheidet, ob das Resultat akzeptabel ist. Nach jeder Zielbremsung speichert das Trajektoriemanagement-Modul 2.2 einen verbleibenden Restweg s und entscheidet in Abhängigkeit von diesem, dem im Verfahrensschritt V4 geschätzten Anhalteweg und dem Resultat der Zielbremsung, ob die Trajektorie umgeplant werden muss.

Anschließend wird mit dem jeweils nächsten Manöverzug zur Erreichung der entsprechenden Zielposition POS1, POS2, ZPOS unter Berücksichtigung des letzten Werts des Restwegs s bei Wahl des Komfortmodus in den hochgenauen Modus fortgefahren, bis die Zielposition ZPOS des gesamten Manövers erreicht ist.

In Figur 8 sind ein Verlauf eines Restwegs s und einer Fahrzeuggeschwindigkeit v in Abhängigkeit von der Zeit t bei einem Manöver mit zwei Manöverzügen, beispielsweise einem Einparkmanöver gemäß Figur 1, dargestellt.

Neben einer Verzögerung des Fahrzeugs 1 beschleunigt die Restwegregelung das Fahrzeug 1 auch, um einen vollständigen Manöverzug vom Anfahren bis zum erneuten Erreichen des Stillstands auszuführen.

Dabei sind die zeitlichen Positionen der Verfahrensschritte V3 bis V6 dargestellt.

## Patentansprüche

1. Verfahren zu einer Restwegregelung für ein Fahrzeug (1) zum Anhalten des Fahrzeugs (1) an einer vorgegebenen Halteposition,
wobei die Restwegregelung wahlweise in einem von zwei Modi durchgeführt wird, von denen einer ein Komfortmodus ist und der andere Modus ein hochgenauer Modus ist,
**dadurch gekennzeichnet, dass**
- das Fahrzeug (1) in mehreren vorgegebenen Manöverzügen zur vorgegebenen Halteposition geführt wird, wobei die einzelnen Manöverzüge jeweils in einer Zielposition (POS1, POS2, ZPOS) enden, an der das Fahrzeug (1) angehalten werden soll,
- eine aktuelle Situation unter Berücksichtigung mindestens eines bereits ausgeführten Manöverzugs bestimmt wird und
- in Abhängigkeit der aktuellen Situation ausgewählt wird, in welchem der beiden Modi die Restwegregelung durchgeführt werden soll, wobei die Auswahl auf einem Abgleich der aktuellen Situation mit einer Liste mit vorgegebenen Situationen basiert, wobei in der Liste für jede der vorgegebenen Situationen vorbestimmt ist, in welchem Modus die Restwegregelung durchgeführt werden soll.

2. Verfahren nach Anspruch 1, wobei der Abgleich der aktuellen Situation mit der Liste mit den vorgegebenen Situationen dadurch erfolgt, dass in Abhängigkeit der aktuellen Situation in der Liste mit den vorgegebenen Situationen eine zur aktuellen Situation korrespondierende vorgegebene Situation identifiziert wird und der für diese Situation vorbestimmte Modus für die Durchführung der Restwegregelung ausgewählt wird.

3. Verfahren nach Anspruch 1 oder 2, wobei die aktuelle Situation unter Berücksichtigung einer Manöverausführungsgenauigkeit des mindestens einen bereits ausgeführten Manöverzugs bestimmt wird.

4. Verfahren nach einem der vorherigen Ansprüche, wobei, die aktuelle Situation unter Berücksichtigung einer Anhaltegenauigkeit, mit der das Fahrzeug (1) in mindestens einem ausgeführten Manöverzug die jeweilige Zielposition (POS1, POS2, ZPOS) erreicht hat, bestimmt wird.

5. Verfahren nach einem der vorherigen Ansprüche, wobei die aktuelle Situation unter Berücksichtigung von mindestens einem ausgeführten Manöverzug, der an einem frühzeitigen Stopppunkt vor Erreichen der jeweiligen Zielposition (POS1, POS2, ZPOS) beendeten worden ist, bestimmt wird.

6. Verfahren nach einem der vorherigen Ansprüche, wobei die aktuelle Situation unter Berücksichtigung von mindestens einem Manöverzug, bei oder nach dessen Ausführung ein verbleibender Restweg (s) zur jeweiligen Zielposition (POS1, POS2, ZPOS) einen vorgegebenen Wert unterschreitet, bestimmt wird.

7. Verfahren nach einem der vorherigen Ansprüche, wobei Streuungen in den Anhaltegenauigkeiten aller ausgeführten Manöverzuge ermittelt und gespeichert werden und bei der Bestimmung der aktuellen Situation berücksichtigt werden.

8. Verfahren nach einem der vorhergehenden Ansprüche,
wobei die aktuelle Situation unter Berücksichtigung
- einer Steigung eines Fahruntergrunds des Fahrzeugs (1) und/oder
- eines Freiraums (R) zwischen dem Fahrzeug (1) und zumindest einem Hindernis. bestimmt wird.

9. Verfahren nach einem der vorhergehenden Ansprüche,
wobei im Komfortmodus gegenüber dem hochgenauen Modus
- eine größere mögliche Anzahl erlaubter Manöverzüge des Fahrzeugs (1), bei oder nach deren Ausführung ein verbleibender Restweg (s) einen vorgegebenen Wert unterschreitet, vorgegeben wird und/oder
- eine größere mögliche Anzahl erlaubter Manöverzüge des Fahrzeugs (1), welche an einem frühzeitigen Stopppunkt beendet werden, vorgegeben wird und/oder
- ein früherer möglicher Zeitpunkt für einen Anfahrvorgang in einem Manöverzug zugelassen wird und/oder
- eine größere Soll-Gleichmäßigkeit eines Bremsvorgangs auf eine Zielposition (POS1, POS2, ZPOS) vorgegeben wird und/oder
- ein Zurückrollen des Fahrzeugs (1) bei einem Anfahrvorgang an einer Steigung und/oder einer Überfahrung eines Bordsteins zugelassen wird und/oder
- eine größere Toleranz gegenüber einer Überschreitung einer maximalen Geschwindigkeit des Fahrzeugs (1) zugelassen wird und/oder
- eine verringerte Reproduzierbarkeit eines Manöverzugs zugelassen wird und/oder
- unter Einhaltung einer Gesamtdauer eines Manöverzugs eine Beschleunigung des Anfahrvorgangs zugelassen wird, eine Beschleunigung eines Erreichens der Höchstgeschwindigkeit zugelassen wird und eine größere Gleichmäßigkeit eines Bremsvorgangs an einer Zielposition (POS1, POS2, ZPOS) vorgegeben wird.

10. Verfahren nach einem der vorhergehenden Ansprüche,
wobei im hochgenauen Modus gegenüber dem Komfortmodus
- eine geringere mögliche Anzahl erlaubter Manöverzüge des Fahrzeugs (1), bei oder nach deren Ausführung ein verbleibender Restweg (s) einen vorgegebenen Wert unterschreitet, vorgegeben wird und/oder
- eine Weiterführung von Manöverzügen des Fahrzeugs (1), welche an einem frühzeitigen Stopppunkt beendet werden, zugelassen wird und/oder
- spätere Zeitpunkte für Anfahrvorgänge in Manöverzügen zugelassen werden und/oder
- eine geringere Soll-Gleichmäßigkeit eines Bremsvorgangs auf eine Zielposition (POS1, POS2, ZPOS) zugelassen wird und/oder
- ein Zurückrollen des Fahrzeugs (1) bei einem Anfahrvorgang an einer Steigung und/oder einer Überfahrung eines Bordsteins nicht zugelassen wird und/oder
- eine geringere Toleranz gegenüber einer Überschreitung einer maximalen Geschwindigkeit des Fahrzeugs (1) zugelassen wird und/oder
- eine erhöhte Reproduzierbarkeit eines Manöverzugs vorgegeben wird und/oder
- eine geringe Priorisierung einer Einhaltung einer Gesamtdauer eines Manöverzugs zugelassen wird.

## Claims

1. Method for remaining-distance control for a vehicle (1) for stopping the vehicle (1) at a predetermined stopping position, the remaining-distance control being optionally carried out in one of two modes, one of which is a comfort mode and the other mode is a high-precision mode,
**characterized in that**
- the vehicle (1) is guided to the predetermined stopping position in a plurality of predetermined maneuvers, the individual maneuvers each ending in a target position (POS1, POS2, ZPOS) at which the vehicle (1) is to be stopped,
- a current situation is determined taking into account at least one maneuver already executed and
- depending on the current situation, it is selected in which of the two modes the remaining-distance control is to be carried out, the selection being based on a comparison of the current situation with a list of predetermined situations, the list predetermining for each of the predetermined situations in which mode the remaining-distance control is to be carried out.

2. Method according to claim 1, wherein the comparison of the current situation with the list of predetermined situations is carried out by identifying a predetermined situation corresponding to the current situation in the list of predetermined situations depending on the current situation and selecting the mode predetermined for this situation for carrying out the remaining-distance control.

3. Method according to claim 1 or 2, wherein the current situation is determined taking into account a maneuver execution accuracy of the at least one maneuver already executed.

4. Method according to any of the preceding claims, wherein the current situation is determined taking into account a stopping accuracy with which the vehicle (1) has reached the particular target position (POS1, POS2, ZPOS) in at least one executed maneuver.

5. Method according to any of the preceding claims, wherein the current situation is determined taking into account at least one executed maneuver which was terminated at an early stopping point before reaching the particular target position (POS1, POS2, ZPOS).

6. Method according to any of the preceding claims, wherein the current situation is determined taking into account at least one maneuver, during or after the execution of which a remaining distance (s) to the particular target position (POS1, POS2, ZPOS) falls below a predetermined value.

7. Method according to any of the preceding claims, wherein variations in the stopping accuracies of all executed maneuvers are determined and stored and taken into account when determining the current situation.

8. Method according to any of the preceding claims,
wherein the current situation is determined taking into account
- a gradient of a driving surface of the vehicle (1) and/or
- a clearance (R) between the vehicle (1) and at least one obstacle.

9. Method according to any of the preceding claims,
wherein in comfort mode, compared to high-precision mode,
- a greater possible number of permitted maneuvers of the vehicle (1) is predetermined, during or after the execution of which a remaining distance (s) falls below a predetermined value and/or
- a greater possible number of permitted maneuvers of the vehicle (1) which are terminated at an early stopping point is predetermined and/or
- an earlier possible time for a start-up procedure in a maneuver is allowed and/or
- a greater target uniformity of a braking procedure to a target position (POS1, POS2, ZPOS) is predetermined and/or
- rolling back of the vehicle (1) when starting on an incline and/or driving over a curb is allowed and/or
- a greater tolerance for exceeding a maximum speed of the vehicle (1) is allowed and/or
- a reduced reproducibility of a maneuver is allowed and/or
- an acceleration of the start-up procedure while maintaining a total duration of a maneuver is allowed, an acceleration of reaching the maximum speed is allowed and a greater uniformity of a braking procedure at a target position (POS1, POS2, ZPOS) is determined.

10. Method according to any of the preceding claims,
wherein in high-precision mode, compared to comfort mode,
- a lower possible number of permitted maneuvers of the vehicle (1) is predetermined, during or after the execution of which a remaining distance (s) falls below a predetermined value, and/or
- a continuation of maneuvers of the vehicle (1) which are terminated at an early stopping point is allowed and/or
- later times for start-up procedures in maneuvers are allowed and/or
- a lower target uniformity of a braking procedure to a target position (POS1, POS2, ZPOS) is allowed and/or
- rolling back of the vehicle (1) when starting on an incline and/or driving over a curb is not allowed and/or
- a lower tolerance for exceeding a maximum speed of the vehicle (1) is allowed and/or
- an increased reproducibility of a maneuver is predetermined and/or
- a low priority of compliance with a total duration of a maneuver is allowed.

## Revendications

1. Procédé permettant une commande de distance restante pour un véhicule (1) pour l'arrêt du véhicule (1) à une position d'arrêt prédéfinie, dans lequel la commande de distance restante est réalisée sélectivement dans l'un de deux modes, dont l'un est un mode confort et l'autre est un mode haute précision,
**caractérisé en ce que**
- le véhicule (1) est guidé en plusieurs déplacements de manœuvre prédéfinis vers la position d'arrêt prédéfinie, dans lequel les déplacements de manœuvre individuels se terminent respectivement dans une position cible (POS1, POS2, ZPOS) à laquelle le véhicule (1) doit être arrêté,
- une situation actuelle est déterminée en tenant compte d'au moins un déplacement de manœuvre déjà exécuté et
- en fonction de la situation actuelle, on choisit dans lequel des deux modes la commande de distance restante doit être réalisée, dans lequel le choix est basé sur une comparaison de la situation actuelle avec une liste de situations prédéfinies, dans lequel dans la liste est prédéterminé, pour chacune des situations prédéfinies, dans quel mode la commande de distance restante doit être réalisée.

2. Procédé selon la revendication 1, dans lequel la comparaison de la situation actuelle avec la liste des situations prédéfinies est effectuée en identifiant, en fonction de la situation actuelle, dans la liste des situations prédéfinies, une situation prédéfinie correspondant à la situation actuelle et en sélectionnant le mode prédéterminé pour cette situation pour la réalisation de la commande de distance restante.

3. Procédé selon la revendication 1 ou 2, dans lequel la situation actuelle est déterminée en tenant compte d'une précision d'exécution de manœuvre de l'au moins un déplacement de manœuvre déjà exécuté.

4. Procédé selon l'une des revendications précédentes, dans lequel, la situation actuelle est déterminée en tenant compte d'une précision d'arrêt avec laquelle le véhicule (1) a atteint la position cible (POS1, POS2, ZPOS) respective dans au moins un déplacement de manœuvre exécuté.

5. Procédé selon l'une des revendications précédentes, dans lequel la situation actuelle est déterminée en tenant compte d'au moins un déplacement de manœuvre exécuté qui s'est terminé à un point d'arrêt précoce avant d'atteindre la position cible (POS1, POS2, ZPOS) respective.

6. Procédé selon l'une des revendications précédentes, dans lequel la situation actuelle est déterminée en tenant compte d'au moins un déplacement de manœuvre, lors de ou après l'exécution duquel une distance restante (s) résiduelle vers la position cible (POS1, POS2, ZPOS) respective est inférieure à une valeur prédéfinie.

7. Procédé selon l'une des revendications précédentes, dans lequel des dispersions dans les précisions d'arrêt de tous les déplacements de manœuvre exécutés sont déterminées et enregistrées et sont prises en compte lors de la détermination de la situation actuelle.

8. Procédé selon l'une des revendications précédentes,
dans lequel la situation actuelle est déterminée en tenant compte
- d'une pente d'une surface de conduite du véhicule (1) et/ou
- d'un espace libre (R) entre le véhicule (1) et au moins un obstacle.

9. Procédé selon l'une des revendications précédentes,
dans lequel en mode confort par rapport au mode haute précision
- un plus grand nombre possible de déplacements de manœuvre autorisés du véhicule (1), lors de ou après l'exécution desquels une distance restante (s) résiduelle est inférieure à une valeur prédéfinie, est prédéfini et/ou
- un plus grand nombre possible de déplacements de manœuvre autorisés du véhicule (1), qui se terminent à un point d'arrêt précoce, est prédéfini et/ou
- un moment possible plus précoce est autorisé pour une opération de démarrage dans un déplacement de manœuvre et/ou
- une plus grande régularité de consigne d'une opération de freinage sur une position cible (POS1, POS2, ZPOS) est prédéfinie et/ou
- un recul du véhicule (1) est autorisé lors d'une opération démarrage en côte et/ou du franchissement d'une bordure de trottoir et/ou
- une plus grande tolérance est autorisée vis-à-vis d'un dépassement d'une vitesse maximale du véhicule (1) et/ou
- une reproductibilité réduite d'un déplacement de manœuvre est autorisée et/ou
- une accélération de l'opération de démarrage est autorisée, une accélération d'une atteinte de la vitesse maximale est autorisée et une plus grande régularité d'une opération de freinage à une position cible (POS1, POS2, ZPOS) est prédéfinie, tout en respectant une durée totale d'un déplacement de manœuvre.

10. Procédé selon l'une des revendications précédentes,
dans lequel en mode haute précision par rapport au mode confort
- un nombre possible plus faible de déplacements de manœuvre autorisés du véhicule (1), lors de ou après l'exécution desquels une distance restante (s) résiduelle est inférieure à une valeur prédéfinie, est prédéfini et/ou
- une poursuite de déplacements de manœuvre du véhicule (1), qui se terminent à un point d'arrêt précoce, est autorisée et/ou
- des moments plus tardifs sont autorisés pour des opérations de démarrage des déplacements de manœuvre et/ou
- une régularité de consigne plus faible d'une opération de freinage sur une position cible (POS1, POS2, ZPOS) est autorisée et/ou
- un recul du véhicule (1) n'est pas autorisé lors d'une opération démarrage en côte et/ou du franchissement d'une bordure de trottoir et/ou
- une tolérance moindre est autorisée vis-à-vis d'un dépassement d'une vitesse maximale du véhicule (1) et/ou
- une reproductibilité accrue d'un déplacement de manœuvre est prédéfinie et/ou
- une faible priorisation d'un respect d'une durée totale d'un déplacement de manœuvre est autorisée.
